# EUROPÄISCHE PATENTSCHRIFT

(11) **EP 0 801 121 B1**
(45) Veröffentlichungstag und Bekanntmachung des Hinweises auf die Patenterteilung: **31.05.2000**
(21) Anmeldenummer: 97104934.1
(22) Anmeldetag: 22.03.1997
(51) Int. Cl.: C09J 7/02, C09J 175/04

(54) **Selbstklebeband auf Polyurethanbasis**
Polyurethane pressure-sensitive adhesive tape
Ruban adhésif auto-collant à base de polyuréthane

(30) Priorität: 13.04.1996 DE 19614620
(43) Veröffentlichungstag der Anmeldung: 15.10.1997
(73) Patentinhaber: Beiersdorf Aktiengesellschaft, 20245 Hamburg (DE)
(72) Erfinder: Schümann, Uwe, Dr., 25421 Pinneberg (DE); Schacht, Wolfgang, Dr., 21629 Neu Wulmstorf (DE); Seitz, Karsten, Dr., 21614 Buxtehude (DE); Jauchen, Peter, 22455 Hamburg (DE)

(56) Entgegenhaltungen:
- WO-A-95/16754
- FR-A- 2 206 365
- FR-A- 2 579 609
- US-A- 5 127 974

## Beschreibung

Die Erfindung beschreibt ein beidseitig klebendes Selbstklebeband, das einerseits spaltüberbrückende Dichtungsfunktionen wahrnehmen kann, andererseits Klebfestigkeiten erreicht, wie sie für im Handel befindliche Hochleistungsklebebänder typisch sind. Das Produkt ist sowohl zur Erzielung kälte- als auch wärmefester Verklebungen geeignet. Um hohe Festigkeiten gegenüber Abschälen und Scherkräften zu erreichen, ist der Einsatz unterschiedlicher Klebebänder bekannt.

In der DE-PS 2105877 wird ein Klebeband aufgezeigt, das aus einem Träger besteht, der auf mindestens einer Seite mit einem mikrozellulären, druckempfindlichen Klebstoff beschichtet ist und dessen Klebstoffschicht einen Keimbildner enthält, wobei die Zellen der Klebstoffschicht geschlossen und vollständig in der Klebstoffschicht verteilt sind. Dieses Klebeband kann sich der unregelmäßigen Oberfläche, auf die es gebracht wird, anpassen und somit zu einer relativ dauerhaften Verklebung führen, zeigt andererseits auch nur eine relativ geringe Erholung, wenn es auf die Hälfte der ursprünglichen Dicke zusammengedrückt worden ist. Die Hohlräume in der Klebmasse bieten allerdings Ansätze für seitliches Eintreten von Lösungsmitteln und Wasser in die Klebefuge, was beispielsweise bei aufgeklebten Leisten im Automobilbau sehr unerwünscht ist. Weiterhin kann der vollständige Durchtritt von Lösungsmitteln oder Wasser durch das gesamte Klebeband nicht ausgeschlossen werden.

In der EP 601 582 A wird ein Klebeband beschrieben, das aus einem geschäumten Elastomerkern besteht, auf den eine druckempfindliche Klebstoffschicht aufgebracht wurde.

Auch hier sind die durch das Prinzip der Hohlräume bedingten Nachteile gegeben, daß der Klebebandkern wie ein Schwamm Feuchtigkeit oder Lösungsmittel aufsaugen kann. Dies kann zu einer Schwächung der Verbundfestigkeit führen. Weiterhin treten durch das Prinzip des geschäumten Elastomerkerns in den Verklebungen Rückstellkräfte auf, die zu einem vorzeitigen Versagen der Verklebungen führen können.

In der DE-PS 28 21 606 wird ein druckempfindliches Klebeband beschrieben, das die oben genannten Nachteile dadurch umgeht, daß das Trägermaterial mit Glasmikrohohlkugeln mit einem Anteil von bis zu 60 Volumenprozent gefüllt ist. Elastische Rückstellkräfte treten hier nach der Verklebung deshalb nicht auf, weil die Oberflächen an den gegenüberliegenden Seiten jeder Zelle aneinander haften und eine Rückstellung verhindern.
Aber auch dieses Klebeband ist mit einigen Nachteilen behaftet. So sind Glasmikrohohlkugeln sehr empfindliche Körper, die beim Einarbeiten in die Klebstoffschicht, beim Lagern, insbesondere aber beim Einsatz des Bandes zum Zerplatzen neigen, mit anschließenden Folgeproblemen aufgrund der entstehenden Splitter.

In der DE-OS 40 29 896 wird ein trägerloses, beidseitig klebendes Selbstklebeband aus einer druckempfindlichen Klebstoffschicht, die Glasmikrovollkugeln enthält, beschrieben. Das Klebeband weist zwar unbestritten ähnlich den vorher erwähnten Klebebändern die Eigenschaft auf, zu dauerhaften Verbindungen zu führen, ist aber in seiner Einsatzfähigkeit wegen der Glasmikrovollkugeln eingeschränkt.

Allen genannten Klebebändern ist gemeinsam, daß die aufnehmbaren Scherkräfte, die auf die geklebte Verbindung einwirken, für viele Einsatzfälle nicht ausreichend sind, um eine dauerhafte Verbindung zwischen Untergrund und dem mittels des Klebebandes zu montierenden Gegenstand zu gewährleisten. So ist insbesondere bei tieferen Temperaturen die Verwendung derartiger Klebebänder nur sehr eingeschränkt möglich, weil bei tiefen Temperaturen eine Versprödung des Trägers auftritt, so daß das Klebeband nicht mehr in der Lage ist, die gewünschte Verklebung aufrechtzuerhalten.

Außerdem ist keines der genannten Klebebänder in der Lage, Spaltbreiten von mehr als 0,5 cm zu überbrücken und abzudichten. Klebebänder, die dazu in der Lage sind, z.B. Butylbänder, erreichen nur sehr geringe Festigkeiten gegenüber Scher- und Kippscherbeanspruchungen, insbesondere bei erhöhten Temperaturen.

Bekannt ist weiterhin ein Laminat aus einem Polyurethan und einer druckempfindlichen Klebeschicht. Ein solches Laminat wird beispielsweise in der WO 86/00536, einer Beschreibung für eine Tablettenverpackung bzw. -darreichungsform, offenbart. Dabei wird eine nicht weiter aufbereitete Polyurethanfolie mit einer selbstklebenden Beschichtung versehen, die eine Tablette umschließt und gleichzeitig mit der Tablette auf der Haut des Anwenders verklebt wird.

Auch in der US 5,127,974 wird ein Laminat aus einer bekannten Polyurethanfolie mit einer selbstklebenden Beschichtung erwähnt. Dies Laminat wird dabei speziell zum vorübergehenden Schutz lackierter Oberflächen von Automobilen eingesetzt.

Ein beidseitig klebendes Selbstklebeband, basierend auf einem Polyurethanträger gemäß obiger Beschreibung und einer beidseitig auflaminierten druckempfindlichen Klebeschicht, wird in den genannten Schriften nicht beschrieben, hat aber darüber hinaus den Nachteil elastischer Rückstellkräfte des Trägers, die nicht aufgefangen werden können und daher zu einer Schwächung der Verbundfestigkeit führen würden.

Der Erfindung liegt die Aufgabe zugrunde, ein Selbstklebeband zu schaffen, das die Nachteile des Standes der Technik nicht, oder zumindest nicht in dem Umfang aufweist und das dennoch nicht in seiner Einsatzfähigkeit ähnlich den vorgenannten Produkten eingeschränkt ist.

Zur Lösung dieser Aufgabe schlägt die Erfindung ein druckempfindliches, beidseitig mit Klebemassen beschichtetes Selbstklebeband vor, dessen Träger von einem formulierten, vernetzten, nicht geschäumten Polyurethan gebildet ist.

Als ein Bestandteil für den Träger wird ein vernetztes, nicht geschäumtes Polyurethan eingesetzt, das mit zusätzlichen Komponenten, nämlich Füllstoffen, Weichmachern und Harzen sowie gegebenenfalls weiteren Hilfsstoffen rezeptiert wird.
Der Anteil des Polyurethans am Träger beträgt bis zu 50 Gew.-%, vorzugsweise 10 Gew.-% bis 40 Gew.-%. Die Füllstoffe machen 40 Gew.-% bis 70 Gew.-% des Trägers aus, während die Weichmacher und Harze zusammen zu 5 Gew.-% bis 30 Gew.-%, insbesondere 10 Gew.-% bis 25 Gew.-%, eingesetzt sind.

Die Auswahl der Isocyanat-Komponente des Polyurethans richtet sich nach den gezielt einzustellenden Eigenschaften des Trägers. In Frage kommen z.B. Toluylendiisocyanat, Diphenylmethan-4,4'-diisocyanat, Dicyclohexylmethan-4,4'-diisocyanat, Hexamethylendiisocyanat, Isophorondiisocyanat, Gemische der genannten Isocyanate oder chemisch daraus abgeleitete Isocyanate, z.B. dimerisierte oder trimerisierte Typen.
Die Auswahl der mit dem Isocyanat reagierenden Komponente richtet sich ebenfalls nach den in Abhängigkeit vom gewünschten Anforderungsprofil einzustellenden Eigenschaften des Trägers. Beispielsweise kommen in Frage alle Polyesterdiole, -triole und - polyole, Polyetherdiole, -triole und -polyole.
Neben den oben aufgezählten Isocyanat-Komponenten und den damit reagierenden Komponenten können aber auch andere Edukte zur Bildung des Polyurethans verwendet werden, ohne den Erfindungsgedanken zu verlassen.

Polyurethane wie oben beschrieben sind in der Herstellung Stand der Technik und beispielsweise in "Ullmann's Encyclopedia of Industrial Chemistry, Vol. A21: Polyurethanes" beschrieben.

Die Formulierung von Polyurethan-Massen ist ebenfalls Stand der Technik und wird besonders bei der Herstellung von Dichtmassen angewendet (vgl. "Ullmann's Encyclopedia of Industrial Chemistry, Vol. A 23: Sealing Materials").

In einer besonders bevorzugten Ausführungsform des Selbstklebebands ist zur Bildung des Polyurethans ein hydroxyl-funktionalisiertes Polybutadien in Verbindung mit einem Diisocyanat eingesetzt.

Als Füllstoffe können sowohl verstärkende, wie zum Beispiel Ruß, als auch nicht verstärkende, wie zum Beispiel Kreide oder Bariumsulfat, eingesetzt werden. Weitere Beispiele sind Talkum, Glimmer, Kieselsäure, Silikate oder Zinkoxid. Auch Mischungen der genannten Stoffe können eingesetzt werden.

Beispiele für Weichmacher sind Phthalate, paraffinische, naphthenische oder aromatische Mineralöle. Als Harze können Phenolharze, Kohlenwasserstoffharze oder Bitumen verwendet werden.

Zur Erhöhung der Alterungsstabilität des Klebebandes kann dies mit üblichen Alterungsschutzmitteln, die je nach Anwendungsfall aus der Klasse der verfärbenden oder der nicht verfärbenden Alterungsschutzmittel stammen können, und zwar im Bereich zwischen 0 Gew.-% und 5 Gew.-% sowie bekannten Lichtschutzmitteln im Bereich zwischen 0 Gew.-% und 5 Gew.-% oder Ozonschutzmitteln im Bereich zwischen 0 Gew.-% und 5 Gew.-% abgemischt werden.
Zur Erzielung von Blasenfreiheit können darüber hinaus Trockenmittel, wie beispielsweise Calziumoxid oder Molekularsieb-Zeolithe der Rezeptur beigemischt werden, insbesondere im Bereich zwischen 0 Gew.-% und 10 Gew.-%.

Alle genannten Hilfsstoffe können je nach Einsatzzweck des Selbstklebebandes entweder allein oder in beliebiger Kombination miteinander zur Herstellung der Polyurethan-masse eingesetzt werden, um eine optimale Abstimmung auf die Verwendung zu erhalten. Durch den Einsatz dieser Zusatzstoffe ist auch die Schwarzfärbung, wie sie insbesondere von der Kraftfahrzeugindustrie gefordert wird, problemlos möglich.

Die Anfertigung der Trägermischung findet vorzugsweise in einem Planetenmischer oder Kneter statt. Um Blasenfreiheit zu erreichen, wird im Vakuumbetrieb gearbeitet. Die Viskosität der Mischung wird so eingestellt, daß sie bei Raumtemperatur im Bereich zwischen 10⁰ und 10⁴ Pa*s liegt. Vorzugsweise erfolgt eine lösungsmittelfreie Verarbeitung.

Die Mischung kann anschließend auf handelsüblichen Beschichtungsmaschinen in einer beliebigen Dicke zwischen 0,1 mm bis 50 mm ausgestrichen werden, vorzugsweise zwischen 0,4 mm und 20 mm.

Im Anschluß erfolgt die chemische Vernetzung im Trockenkanal, vorzugsweise bei Temperaturen von 40 °C bis 180 °C oder durch Lagerung bei Raumtemperatur.

Als Klebmassen können allgemein vorbekannte Klebmassen auf Kautschuk- oder Acrylatbasis verwendet werden.

Um die Verankerung der Klebmasse auf dem Träger zu erhöhen, können bekannte Haftvermittler zugesetzt werden. Alternativ dazu kann auch eine Corona-Vorbehandlung vorgenommen werden. Um besonders feste Verankerungen zu erzielen, ist auch eine Kombination der aufgeführten Verfahren möglich.

Um die Wanderung von beispielsweise Weichmachern aus dem Träger in die Klebebeschichtung zu verhindern und gleichzeitig die Verankerung der Klebebeschichtung auf dem Träger zu erhöhen, kann zwischen Träger und Klebebeschichtung eine Lackschicht aufgebracht sein. Der Lack stammt dabei vorzugsweise aus der Gruppe der Polyamid-, Epoxid-, Phenol-, Harnstoff-Formaldehyd-, Melamin-Formaldehyd- oder Polyurethanharze.

Die Klebmasse kann direkt, im indirekten Transferverfahren oder durch Coextrusion mit dem Träger aus der Lösung, Dispersion oder Schmelze aufgetragen werden. Das Auftragsgewicht der Klebmasse ist ebenfalls je nach Einsatzzweck beliebig innerhalb des Bereiches von 10 g/m² bis 250 g/m², vorzugsweise 40 g/m² bis 150 g/m², wählbar.

Ein Selbstklebeband gemäß obiger Beschreibung, im wesentlichen bestehend aus einem Laminat aus einer formulierten Polyurethan-Masse und einer druckempfindlichen Klebschicht sowie gekennzeichnet durch einen dreischichtigen Aufbau Klebschicht/formulierte Polyurethanmasse/Klebschicht, ist gegenüber dem Stand der Technik neu.

Das Selbstklebeband zeigt aufgrund der Formulierung des Polyurethans mit Weichmachern und Harzen sowie Füllstoffen hervorragende Produkteigenschaften, die auch für den Fachmann derartig nicht vorherzusehen waren.
Weichmacher und Harze sowie Füllstoffe nehmen dem Polyurethanträger einen Teil seiner elastischen Rückstellkräfte und tragen damit zur dauerhaften Verbundfestigkeit der Verklebungen bei.
Aufgrund der hohen Flexibilität des Trägers paßt sich das Klebeband sehr gut unebenem Untergrund an, wenn es mit einem gewissen Druck auf diesen gepreßt wird. Auf diese Weise entsteht eine sehr dauerhafte Verbindung zwischen Klebeband und Untergrund, die auch bei hohen Scherkräften, die auf das Selbstklebeband einwirken, nicht versagt. Wegen der fehlenden seitlich offenen Hohlräume im Träger wird auch das mögliche Eindringen von Lösungsmitteln oder Wasser in das Klebeband mit all seinen bekannten Nachteilen verhindert. Da das Klebeband gemäß Erfindung in Dicken von 2 cm und mehr hergestellt werden kann, ist es auch als selbstklebendes, spaltüberbrükkendes Abdichtband einsetzbar.

Aufgrund des sehr niedrigen Glaspunktes des Klebebandes sind Tieftemperatureinsätze bis - 40 °C möglich, weil die sonst zu beobachtende Versprödung bekannter Klebebänder nicht auftritt, so daß auch bei diesen extremen Temperaturen eine optimale Haftung des Klebebandes gewährleistet ist.

Die gute Wärme- und Alterungsstabilität des Klebebandes, hervorgerufen durch die nicht-geschäumte Trägerkonsistenz, die ein Eindringen von Feuchtigkeit und Luftsauerstoff verhindert, ermöglicht auch den Einsatz bei höheren Temperaturen von 70 °C bis 100 °C.

Kälte- und Wärmebelastbarkeiten werden beispielsweise bei der Verklebung von Zierleisten oder Spiegeln im Automobilbau gefordert, weil die Fahrzeuge teilweise auch in sehr kalten Zonen beziehungsweise sehr warmen Regionen der Erde mit hoher Sonneneinstrahlung gefahren werden.

Die Verwendung der Erfindung erfolgt außer in der Automobilindustrie auch in der Möbel- und Bauindustrie, wo ebenfalls Spiegel, Leisten oder Blenden dauerhaft mit dem Untergrund zu verankern sind.

Wegen der hervorragenden Eigenschaften ist der Einsatz der Erfindung aber nicht auf die genannten Beispiele beschränkt. Vielmehr ist die Verwendung des Klebebandes in vielen Industriebereichen als Montagematerial möglich, wenn es gilt, auf einer relativ unebenen Oberfläche eine sichere Verbindung zwischen zwei Teilen unterschiedlichster Materialien zu schaffen.

Im folgenden soll die Erfindung anhand von Ausführungsbeispielen näher erläutert werden.

### Beispiele

In der Tabelle 1 sind die zur Herstellung des Trägers verwendeten Materialien aufgeführt, und zwar jeweils mit Handelsnamen und Hersteller. Die genannten Chemikalien sind alle frei im Handel erhältlich.

Die Ausgangsstoffe werden jeweils je nach Anwendungszweck des Selbstklebebandes in unterschiedlichen Mischungsverhältnissen eingesetzt.

**Tabelle 1:**

| Zur Herstellung des Trägers eingesetzte Materialien mit Handelsnamen und Hersteller | | |
|---|---|---|
| Handelsname | Chemische Basis | Hersteller |
| Poly bd R45HT ® | Hydroxyl-funktionalisiertes Polybutadien | Elf Atochem |
| Santicizer 261 ® | Benzyloctylphthalat | Monsanto |
| Omyacarb 4BG ® | Kreide | OMYA |
| Bitumen B 65 ® | Bitumen | Elf Bitumen Deutschland |
| Weißfeinkalk ® | Calciumoxid | RWK |
| Printex 30 ® | Ruß | Degussa |
| Desmodur CD ® | modifiziertes Diphenylmethan-4,4'-diisocyanat | Bayer |
| Vestanat IPDI ® | Isophorondiisocyanat | Hüls |

Im folgenden werden drei Rezepturen für die Herstellung von erfindungsgemäßen Trägern jeweils in Form einer Tabelle dargestellt. Die Aufbereitung der verwendeten Materialien erfolgt dabei stets auf dem nachstehend beschriebenen Weg.

### Beispiel 1

| | |
|---|---|
| Poly bd R45HT | 18,0 kg |
| Santicizer 261 | 20,0 kg |
| Omyacarb 4BG | 49,8 kg |
| Weißfeinkalk | 3,0 kg |
| Printex 30 | 7,0 kg |
| Desmodur CD | 2,2 kg |

### Beispiel 2

| | |
|---|---|
| Poly bd R45HT | 18,0 kg |
| Bitumen B 65 | 15,0 kg |
| Omyacarb 4BG | 54,8 kg |
| Weißfeinkalk | 3,0 kg |
| Printex 30 | 7,0 kg |
| Desmodur CD | 2,2 kg |

### Beispiel 3

| | |
|---|---|
| Poly bd R45HT | 18,0 kg |
| Bitumen B 65 | 15,0 kg |
| Omyacarb 4BG | 55,3 kg |
| Weißfeinkalk | 3,0 kg |
| Printex 30 | 7,0 kg |
| Vestanat IPDI | 1,7 kg |

Die Komponenten in den genannten Beispielen werden in einem handelsüblichen Planetenmischer zwei Stunden miteinander gemischt, wobei das Isocyanat erst 15 min vor Beendigung des Mischvorganges zugegeben wird. Um ein blasenfreies Produkt zu erhalten, wird die Mischung während der letzten 10 min des Mischvorganges durch Anlegen eines Unterdruckes von kleiner 15 Torr entgast. Man erhält jeweils eine bei Raumtemperatur weiterverarbeitbare, strukturviskose Paste im Viskositätsbereich von 50 Pa*s bis 5000 Pa*s.

Die Pasten werden anschließend auf einer handelsüblichen Beschichtungsanlage auf handelsüblichem, beidseitig silikonisiertem Papier zu einer Bahn von 1 mm Dicke ausgestrichen und im anschließenden Trockenkanaldurchgang bei einer Temperatur von 120 °C bis 180 °C und einer Verweildauer von 10 min bis 30 min zu einem Elastomer vernetzt. Die Träger haben nach der Härtung und einer anschließenden Lagerung von einer Woche bei Raumtemperatur eine Shore-A-Härte von 50 bis 90, eine Glasübergangstemperatur im Bereich von -60 °C bis -70 °C und eine Zugfestigkeit von größer 1 N/mm² bei einer Reißdehnung von kleiner 500 %.

Anschließend wird das Material in zwei Schritten beidseitig mit je 60 g/m² der Polyacrylatmasse Durotac 280-1753 der Fa. National Starch beschichtet. Die Beschichtung mit der Lösungsmittelmasse erfolgt nach einer in-line Coronabehandlung direkt auf den Träger. Es wird bei 100 °C vernetzt und getrocknet. Das so erhaltene doppelseitige Klebeband wird einseitig mit Trennpapier abgedeckt.

Das doppelseitige Klebeband zeichnet sich durch hohe Klebkräfte bei gleichzeitiger hoher Scherfestigkeit aus und die damit erzeugten Verklebungen besitzen eine exzellente Kälteschlagfestigkeit. Das Material dichtet gut gegenüber Feuchtigkeit ab.

## Patentansprüche

1. Druckempfindliches Selbstklebeband, umfassend einen beidseitig mit druckempfindlichen Klebemassen beschichteten Träger, der sich zusammensetzt
a) zu einem Gewichtsanteil von bis zu 50 Gew.-%, insbesondere von 10 Gew.-% bis 40 Gew.-%, aus einem vernetzten, nicht geschäumten Polyurethan,
b) zu einem Gewichtsanteil von 40 Gew.-% bis 70 Gew.-% aus Füllstoffen,
c) zu einem Gewichtsanteil von 5 Gew.-% bis 30 Gew.-%, insbesondere von 10 Gew.-% bis 25 Gew.-%, aus Weichmachern und Harzen sowie
d) gegebenenfalls weiteren Hilfsstoffen.

2. Druckempfindliches Selbstklebeband nach Anspruch 1, dadurch gekennzeichnet, daß zur Bildung des Polyurethans eingesetzt sind
- ein hydroxyl-funktionalisiertes Polybutadien sowie
- ein Diisocyanat.

3. Druckempfindliches Selbstklebeband nach den Ansprüchen 1 und 2, dadurch gekennzeichnet, daß als verstärkende oder nicht verstärkende Füllstoffe eingesetzt sind:Ruß, Kreide, Bariumsulfat, Talkum, Glimmer, Kieselsäure, Silikate, Zinkoxid.

4. Druckempfindliches Selbstklebeband nach den Ansprüchen 1 bis 3, dadurch gekennzeichnet, daß als Weichmacher Phthalate, paraffinische, naphthenische oder aromatische Mineralöle sowie als Harze Phenolharze, Kohlenwasserstoffharze oder Bitumen eingesetzt sind.

5. Druckempfindliches Selbstklebeband nach den Ansprüchen 1 bis 4, dadurch gekennzeichnet, daß als Hilfsstoffe eingesetzt sind :
- verfärbende oder nicht verfärbende Alterungsschutzmittel im Bereich von 0 Gew.-% bis 5 Gew.-%,
- Lichtschutzmittel im Bereich von 0 Gew.-% bis 5 Gew.-%,
- Ozonschutzmittel im Bereich von 0 Gew.-% bis 5 Gew.-% sowie
- Trockenmittel, insbesondere Calziumoxid oder Molekularsieb-Zeolithe, im Bereich von 0 Gew.-% bis 10 Gew.-%.

6. Druckempfindliches Selbstklebeband nach den Ansprüchen 1 bis 5, dadurch gekennzeichnet, daß der Träger eine Dicke von 0,1 mm bis 50 mm, vorzugsweise 0,4 mm bis 20 mm, aufweist.

7. Druckempfindliches Selbstklebeband nach den Ansprüchen 1 bis 6, dadurch gekennzeichnet, daß zwischen Träger und Klebebeschichtung eine Lackschicht aus der Gruppe der Polyamid-, Epoxid-, Phenol-, Harnstoff-Formaldehyd-, Melamin-Formaldehyd- oder Polyurethanharze aufgebracht ist.

8. Druckempfindliches Selbstklebeband nach den Ansprüchen 1 bis 7, dadurch gekennzeichnet, daß die Klebmasse mit einem Flächengewicht von 10 g/m² bis 250 g/m², vorzugsweise 40 g/m² bis 150 g/m², auf den Träger beschichtet wird.

9. Verwendung eines druckempfindlichen Klebebandes nach den Ansprüchen 1 bis 8 zum Abdichten, insbesondere zum Verschließen von Spalten.

## Claims

1. Pressure-sensitive self-adhesive tape comprising a backing coated on both sides with pressure-sensitive adhesive compositions, which backing is composed
a) in a proportion by weight of up to 50% by weight, in particular from 10% by weight to 40% by weight, of a crosslinked, non-foamed polyurethane,
b) in a proportion by weight of from 40% by weight to 70% by weight of fillers,
c) in a proportion by weight of from 5% by weight to 30% by weight, in particular from 10% by weight to 25% by weight, of plasticizers and resins, and
d) if desired, of further auxiliaries.

2. Pressure-sensitive self-adhesive tape according to Claim 1, characterized in that the polyurethane is formed using
- a hydroxyl-functionalized polybutadiene and
- a diisocyanate.

3. Pressure-sensitive self-adhesive tape according to Claims 1 and 2, characterized in that reinforcing or non-reinforcing fillers employed are carbon black, chalk, barium sulphate, talc, mica, silicic acid, silicates, zinc oxide.

4. Pressure-sensitive self-adhesive tape according to Claims 1 to 3, characterized in that plasticizers employed are phthalates or paraffinic, naphthenic or aromatic mineral oils and resins employed are phenolic resins, hydrocarbon resins or bitumen.

5. Pressure-sensitive self-adhesive tape according to Claims 1 to 4, characterized in that auxiliaries employed are
- discolouring or non-discolouring anti-ageing agents in the range from 0% by weight to 5% by weight,
- light stabilizers in the range from 0% by weight to 5% by weight,
- ozone protection agents in the range from 0% by weight to 5% by weight, and
- drying agents, especially calcium oxide or molecular sieve zeolites, in the range from 0% by weight to 10% by weight.

6. Pressure-sensitive self-adhesive tape according to Claims 1 to 5, characterized in that the backing has a thickness of from 0.1 mm to 50 mm, preferably from 0.4 mm to 20 mm.

7. Pressure-sensitive self-adhesive tape according to Claims 1 to 6, characterized in that between backing and adhesive coating there is applied a layer of a coating agent from the group consisting of polyamide, epoxy, phenolic, urea-formaldehyde, melamine-formaldehyde and polyurethane resins.

8. Pressure-sensitive self-adhesive tape according to Claims 1 to 7, characterized in that che adhesive composition is applied to the backing in a weight per unit area of from 10 g/m² to 250 g/m², preferably from 40 g/m² to 150 g/m².

9. Use of a pressure-sensitive adhesive tape according to Claims 1 to 8 for sealing, especially for closing off gaps.

## Revendications

1. Ruban autoadhésif sensible à la pression comprenant un support revêtu sur les deux faces de compositions adhésives sensibles à la pression, lequel est composé de
a) un polyuréthanne réticulé non expansé en une proportion pondérale allant jusqu'à 50 % en poids, en particulier de 10 % en poids à 40 % en poids,
b) des charges en une proportion pondérale de 40 % en poids à 70 % en poids,
c) des plastifiants et des résines en une proportion pondérale de 5 % en poids à 30 % en poids, en particulier de 10 % en poids à 25 % en poids, et
d) éventuellement d'autres auxiliaires.

2. Ruban autoadhésif sensible à la pression selon la revendication 1, caractérisé en ce que le polyuréthanne est formé en utilisant
- un polybutadiène à fonctionnalisation hydroxy et
- un diisocyanate.

3. Ruban autoadhésif sensible à la pression selon les revendications 1 et 2, caractérisé en ce que l'on utilise, en tant que charges renforçantes ou non renforçantes, du noir de carbone, de la craie, du sulfate de baryum, du talc, du mica, de l'acide silicique, des silicates, de l'oxyde de zinc.

4. Ruban autoadhésif sensible à la pression selon les revendications 1 à 3, caractérisé en ce que l'on utilise, en tant que plastifiants, des phtalates, des huiles minérales paraffiniques, naphténiques ou aromatiques et, en tant que résines, des résines phénoliques, des résines hydrocarbonées ou du bitume.

5. Ruban autoadhésif sensible à la pression selon les revendications 1 à 4, caractérisé en ce que l'on utilise, en tant qu'auxiliaires :
- des agents anti-vieillissement décolorants ou non décolorants dans la gamme de 0 % en poids à 5 % en poids,
- des photostabilisants dans la gamme de 0 % en poids à 5 % en poids,
- des agents de protection contre l'ozone dans la gamme de 0 % à 5 % en poids et,
- des agents desséchants, en particulier de l'oxyde de calcium ou des tamis moléculaires zéolitiques dans la gamme de 0 % en poids à 10 % en poids.

6. Ruban autoadhésif sensible à la pression selon les revendications 1 à 5, caractérisé en ce que le support présente une épaisseur de 0,1 mm à 50 mm, de préférence de 0,4 mm à 20 mm.

7. Ruban autoadhésif sensible à la pression selon les revendications 1 à 6, caractérisé en ce que l'on applique, entre le support et le revêtement adhésif, une couche d'agent de revêtement parmi le groupe constitué des résines de polyamide, époxy, phénoliques, urée-formaldéhyde, mélamine-formaldéhyde ou de polyuréthanne.

8. Ruban autoadhésif sensible à la pression selon les revendications 1 à 7, caractérisé en ce que la composition adhésive est appliquée sur le support à un poids spécifique de 10 g/m² à 250 g/m², de préférence de 40 g/m² à 150 g/m².

9. Utilisation d'un ruban adhésif sensible à la pression selon les revendications 1 à 8 en vue de rendre étanche, en particulier en vue de boucher des espaces.
